# EUROPEAN PATENT SPECIFICATION

(11) **EP 3 196 958 B1**
(45) Date of publication and mention of the grant of the patent: **05.12.2018**
(21) Application number: 17152376.4
(22) Date of filing: 20.01.2017
(51) Int. Cl.: H01M 2/04, H01M 2/12, H01M 2/34

(54) **CAP ASSEMBLY FOR SECONDARY BATTERY AND SECONDARY BATTERY INCLUDING THE SAME**
KAPPENANORDNUNG FÜR SEKUNDÄRBATTERIE UND SEKUNDÄRBATTERIE DAMIT
ENSEMBLE CAPUCHON POUR BATTERIE SECONDAIRE ET BATTERIE SECONDAIRE LE COMPRENANT

(30) Priority: 20.01.2016 KR 20160007051
(43) Date of publication of application: 26.07.2017
(73) Proprietor: Samsung SDI Co., Ltd, Gyeonggi-do 17084 (KR)
(72) Inventor: PARK, Gun Gue, 17084 Gyeonggi-do (KR); BAK, Hyo Rim, 17084 Gyeonggi-do (KR)
(74) Representative: Mounteney, Simon James

(56) References cited:
- EP-A2- 0 364 995
- US-A1- 2009 233 160
- US-A1- 2015 287 965

## Description

### BACKGROUND

### 1. Field

One or more embodiments of the invention relates to a cap assembly for a secondary battery, the cap assembly being configured to ensure stable performance of a current interrupt device (CID) even when heat is generated in the secondary battery due to a short circuit or the like.

### 2. Description of the Related Art

Secondary batteries are rechargeable and thus, may be repeatedly used as energy sources of portable electronic devices, electric tools, gardening tools, electric vehicles (EVs), electric power storage systems, etc.

In general, cylindrical secondary batteries are used in such applications, and current interrupt devices (CIDs) are provided in such cylindrical secondary batteries to ensure the safety of the cylindrical secondary batteries.

CIDs are protection devices for preventing explosions caused by high internal pressure situations arising in secondary batteries. When the internal pressure of a secondary battery increases, a CID interrupts current between an electrode assembly and a cap assembly of the secondary battery to stop charging of the secondary battery.

However, if an insulator of such a CID melts due to heat generated, for example, in a short circuit situation, the current is not interrupted by the CID.

For example, when a positive electrode plate and a negative electrode plate of a secondary battery are short circuited, an abnormal situation may arise due to joule heat caused by short-circuit current, and if an insulator of a CID of the secondary battery is melted by the joule heat, the current flowing from an electrode assembly to a cap assembly may not be interrupted. As a result, the secondary battery may be overcharged and may catch on fire or explode.

### SUMMARY

One or more embodiments of the invention seek to provide a cap assembly for a secondary battery, the cap assembly being configured to stably maintain the performance of a current interrupt device (CID) even when heat is generated in the secondary battery due to a short circuit or the like.

Additional aspects of the invention will be set forth in part in the description which follows and, in part, will be apparent from the description, or may be learned by practice of the presented embodiments.

According to a first aspect of the invention, a cap assembly comprises the features of claim 1. Optional features of this aspect of the invention are set-out in claims 2 to 6.

According to a further aspect of the invention, a secondary battery includes the cap assembly.

### BRIEF DESCRIPTION OF THE DRAWINGS

The above and/or other aspects of the invention will become apparent and more readily appreciated from the following description of the embodiments, taken in conjunction with the accompanying drawings in which:
FIG. 1 is a cut-away view illustrating a secondary battery;
FIG. 2 is an exploded perspective view illustrating a cap assembly;
FIG. 3 is a cross-sectional view illustrating the cap assembly;
FIG. 4A is a top perspective view illustrating an insulator;
FIG. 4B is a bottom perspective view illustrating the insulator;
FIG. 5 is an enlarged view illustrating a portion A in FIG. 3, that is, a partial cross-sectional view illustrating the cap assembly;
FIG. 6 is a partial cross-sectional view illustrating the cap assembly according to an embodiment of the invention;
FIG. 7A is a graph illustrating results of thermo mechanical analysis (TMA) according to a comparative example of the invention;
FIG. 7B is a graph illustrating results of TMA according to an inventive example;
FIGS. 8A to 8D are views sequentially illustrating procedures of an insulation test performed on cap assemblies fabricated according to the comparative example and the inventive example, the insulation test being performed under actual operation conditions of secondary batteries;
FIG. 9A is a graph illustrating results of an external short circuit test performed on a secondary battery including a cap assembly fabricated according to the inventive example; and
FIG. 9B is a graph illustrating results of an external short circuit test performed on a secondary battery including a cap assembly fabricated according to the comparative example.

### DETAILED DESCRIPTION

Reference will now be made in detail to embodiments of the invention, examples of which are illustrated in the accompanying drawings, wherein like reference numerals refer to like elements throughout. In this regard, embodiments of the invention may have different forms and the invention should not be construed as being limited to the descriptions set forth herein. Accordingly, the embodiments are merely described below, by referring to the figures, to explain aspects of the present invention. As used herein, the term "and/or" includes any and all combinations of one or more of the associated listed items.

Hereinafter, the embodiments will be described with reference to the accompanying drawings.

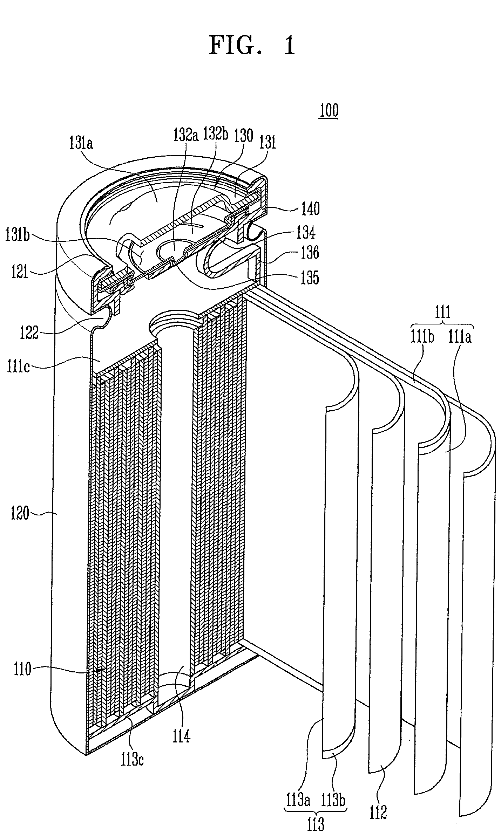

FIG. 1 is a cut-away view illustrating a secondary battery 100.

Referring to FIG. 1, the secondary battery 100 includes an electrode assembly 110 configured to generate current, a can 120 accommodating the electrode assembly 110, and a cap assembly 130 coupled to the can 120 and electrically connected to the electrode assembly 110.

The electrode assembly 110 includes a positive electrode plate 111, a negative electrode plate 113, and a separator 112, and the separator 112 is placed between the positive electrode plate 111 and the negative electrode plate 113. The positive electrode plate 111, the separator 112, and the negative electrode plate 113 may be sequentially stacked and wound in the form of a jelly roll. The electrode assembly 110 may have a cylindrical shape, and a centre pin 114 may be placed in a centre portion of the electrode assembly 110 to maintain the cylindrical shape of the electrode assembly 110.

The positive electrode plate 111 includes a current collector including metallic foil, a coated portion 111a to which an active material is applied, and a non-coated portion 111b to which no active material is applied. The negative electrode plate 113 includes a current collector including metallic foil, a coated portion 113a to which an active material is applied, and a non-coated portion 113b to which no active material is applied. A positive current collecting plate 111c is connected to the non-coated portion 111b of the positive electrode plate 111, and a negative current collecting plate 113c is connected to the non-coated portion 113b of the negative electrode plate 113.

The can 120 is a cylindrical barrel having an opening in an end thereof and a space for accommodating the electrode assembly 110. The negative current collecting plate 113c may be welded to a bottom surface of the can 120, and thus the can 120 may function as a negative electrode terminal. The can 120 may include stainless steel, aluminium, or an equivalent thereof. However, the can 120 is not limited thereto.

The cap assembly 130 is coupled to the opening of the can 120 with a gasket 140 being disposed therebetween, so as to seal the can 120 containing the electrode assembly 110 and an electrolyte. In addition, the cap assembly 130 includes a current interrupt device (CID) and is electrically connected to the electrode assembly 110.

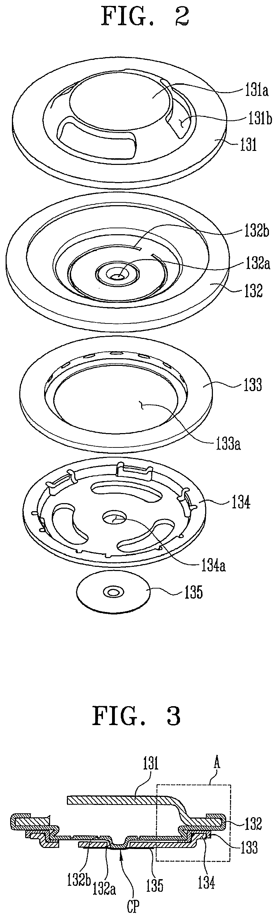

FIG. 2 is an exploded perspective view illustrating the cap assembly 130, and FIG. 3 is a cross-sectional view illustrating the cap assembly 130.

Referring to FIGS. 2 and 3, the cap assembly 130 includes a cap plate 131, a vent plate 132, an insulator 133, a middle plate 134, and a sub-plate 135. Substantially, the CID is formed by the vent plate 132 and the sub-plate 135, and a connection portion CP is formed at a welded portion between the vent plate 132 and the sub-plate 135.

The cap plate 131 is connected to the positive current collecting plate 111c and functions as a positive terminal of the secondary battery 100. The cap plate 131 includes a terminal 131a protruding outward and ventilation holes 131b.

The vent plate 132 is placed under the cap plate 131 to surround an edge portion of the cap plate 131. The vent plate 132 forms an upper portion of the CID and is electrically connected through the connection portion CP to the sub-plate 135 forming a lower portion of the CID.

The vent plate 132 deforms when the internal pressure of the secondary battery 100 increases. For example, if the internal pressure of the secondary battery 100 is increased because of gas generated from the electrode assembly 110 in a situation such as an overcharging situation, the shape of the vent plate 132 is reverted upward, and thus the vent plate 132 is separated from the sub-plate 135 as described later, thereby interrupting current.

For example, the vent plate 132 includes a vent portion 132a configured to fracture in a pre-set pressure condition to discharge gas from the inside of the secondary battery 100 and break electric connection between the vent plate 132 and the sub-plate 135. When the CID operates, the connection portion CP being a contact between the vent plate 132 and the sub-plate 135 may be separated as the vent portion 132a breaks, and as a result, the electrode assembly 110 and the cap plate 131 may be electrically disconnected.

Referring to FIG. 3, the vent portion 132a protrudes from the vent plate 132 toward the can 120. In addition, a notch 132b is formed around the vent portion 132a to guide fracture of the vent portion 132a. If the internal pressure of the can 120 is increased because of gas generated in the can 120, fracture may first occur at the notch 132b, and then the gas may be discharged through the ventilation holes 131b, thereby preventing explosion of the secondary battery 100.

The sub-plate 135 is placed under the vent plate 132 and faces the vent plate 132 with the insulator 133 and the middle plate 134 being disposed therebetween. The sub-plate 135 is electrically connected to the vent portion 132a through the connection portion CP.

The middle plate 134 is placed under the insulator 133, and penetration holes 133a and 134a are respectively formed in the insulator 133 and the middle plate 134. Thus, the vent portion 132a protruding into the can 120 through the penetration holes 133a and 134a may be connected to the sub-plate 135.

Thus, a side of the middle plate 134 is electrically connected to the vent plate 132 through the sub-plate 135 and the vent portion 132a, and another side of the middle plate 134 is connected to the positive current collecting plate 111c through a connection member 136. As a result, the positive current collecting plate 111c is electrically connected to the cap plate 131 through the connection member 136, the middle plate 134, the sub-plate 135, the vent portion 132a, and the vent plate 132.

The cap assembly 130 formed as described above is inserted into the can 120 and then fixed to the can 120 by clamping. At this time, a clamping portion 121 bent into the can 120 is formed on an edge of the opening of the can 120, and a beaded portion 122 having an inwardly convex shape is formed on the can 120 between the cap assembly 130 and the electrode assembly 110. The clamping portion 121 pushes the cap assembly 130, and thus the coupling strength between the cap assembly 130 and the can 120 is improved. The inner diameter of the beaded portion 122 is smaller than the outer diameter of the cap assembly 130, and thus the electrode assembly 110 may be fixedly placed in the can 120.

As described above, in the cap assembly 130, the cap plate 131, the vent plate 132, the insulator 133, the middle plate 134, and the sub-plate 135 are sequentially stacked.

The vent plate 132 and the sub-plate 135 form the CID in a state in which the middle plate 134 is disposed between the vent plate 132 and the sub-plate 135, and thus the insulator 133 disposed between an edge portion of the middle plate 134 and an edge portion of the vent plate 132 may have a key role on the function of the CID.

For example, if the insulator 133 is deformed and melted by heat in a short circuit situation, even after the CID operates, current may flow again.

That is, when the CID operates, the connection portion CP being a contact between the vent plate 132 and the sub-plate 135 is separated by fracture of the vent portion 132a, and thus current flowing from the electrode assembly 110 to the cap assembly 130 is interrupted. Thereafter, if the insulator 133 melts in an abnormal heating state, a direct or indirect current passage may be formed between the edge portion of the vent plate 132 and the edge portion of the middle plate 134 that are insulated from each other by the insulator 133, and current may flow again from the electrode assembly 110 to the cap assembly 130 through the direct or indirect current passage.

Thus, the insulator 133 includes a polymer material having improved heat-resistant characteristics compared to materials used in the related art.

The insulator 133 may include a crosslinked polypropylene (PP) resin material. Alternatively, the insulator 133 may include a crosslinked polyethylene (PE) resin material.

For example, a crosslinkable PP resin may be injection molded and treated through a water crosslinking process to form the insulator 133 including a crosslinked PP resin structure. In the same manner, a crosslinkable PE resin may be injection molded and treated through a water crosslinking process to form the insulator 133 including a crosslinked PE resin structure.

Besides the crosslinkable PP or PE functioning as an insulative material for interrupting current between the vent plate 132 and the middle plate 134, the crosslinkable PP or PE resin may be easily formed into a shape suitable for the assembling and functioning of the cap assembly 130 through an injection molding process for mass production. In addition, the crosslinkable PP or PE resin may be treated through a crosslinking process as post-process so as to improve the heat resistant characteristics of the PP or PE resin.

There may be a material having higher heat resistance than the PP or PE resin. However, it is difficult to perform an injection molding process on a material as the melting point of the material is high. Thus, according to an embodiment, when shaping and mass production of the cap assembly 130 are considered, the insulator 133 may be formed by an injection molding process using a PP or PE resin, and a water crosslinking process may be performed as a post-process on the insulator 133.

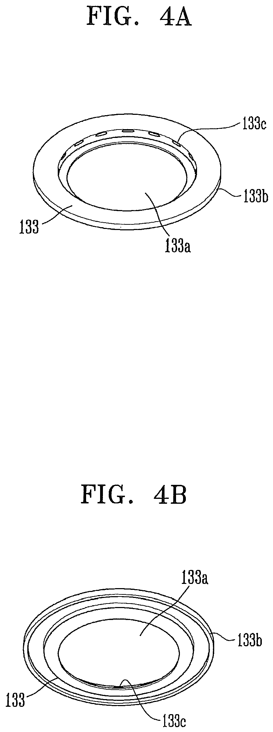

Since the insulator 133 is crosslinked through a water crosslinking process (post-process) as described above, the insulator 133 may include an anti-deformation rib 133b (refer to FIGS. 4A and 4B) so as to prevent deformation (twisting) of the insulator 133 during the water crosslinking process.

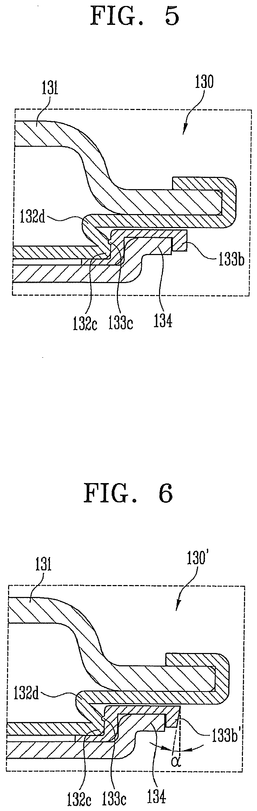

FIG. 4A is a top perspective view illustrating the insulator 133, and FIG. 4B is a bottom perspective view illustrating the insulator 133. FIG. 5 is an enlarged view illustrating a portion A in FIG. 3.

Referring to FIGS. 4A and 4B, the insulator 133 has a circular ring shape with a central opening. The opening of the insulator 133 is the above-described penetration hole 133a, which provides a space together with the penetration hole 134a of the middle plate 134 to allow the vent portion 132a to protrude into the can 120.

In addition, as illustrated in FIGS. 4A and 5, the anti-deformation rib 133b is cylindrical in shape and formed in an outer circumferential edge region of the circular ring shape of the insulator 133. The anti-deformation rib 133b therefore projects in an axial direction of the insulator 133, and serves as a reinforcement structure.

In addition, as illustrated in FIGS. 4A and 5, a plurality of protrusions 133c are formed along an inner circumference of the circular ring shape of the insulator 133. The protrusions 133c protrude from an inner side of the circular ring shape of the insulator 133 toward the penetration hole 133a, and thus the vent plate 132 may be interference fitted into the circular ring shape of the insulator 133 and may not be separated from the insulator 133.

For example, as illustrated in FIG. 5, the vent plate 132 may include a lower bent portion 132c and an upper bent portion 132d that form an S-shaped bent structure, and after the vent plate 132 is coupled to the insulator 133, the protrusions 133c may be engaged with an upper portion of the lower bent portion 132c, thereby preventing separation of the vent plate 132 from the insulator 133.

According to an embodiment of the invention, as illustrated in FIG. 6, the thickness of an anti-deformation rib 133b' may reduce downwardly.

For example, the anti-deformation rib 133b' may have an inner side and an outer side, and the outer side of the anti-deformation rib 133b' may form a tapered structure such that the thickness of the anti-deformation rib 133b' may decrease downward. That is, the outer side of the anti-deformation rib 133b' may be tapered at an angle α from a direction in which the anti-deformation rib 133b' stands on the flat surface on which the circular ring shape of the insulator 133 is placed. The angle α may be about 5°.

As described above, the insulator 133 is easily formed into a shape suitable for the assembling and functioning of the cap assembly 130 through an injection moulding process for mass production. Thus, since the outer side of the anti-deformation rib 133b' of the insulator 133 has a tapered structure, the insulator 133 may be easily separated from an injection mould. For example, a worker may easily separate the insulator 133 from an injection mould by lifting an upper portion (the thickest portion) of the anti-deformation rib 133b' using a pin.

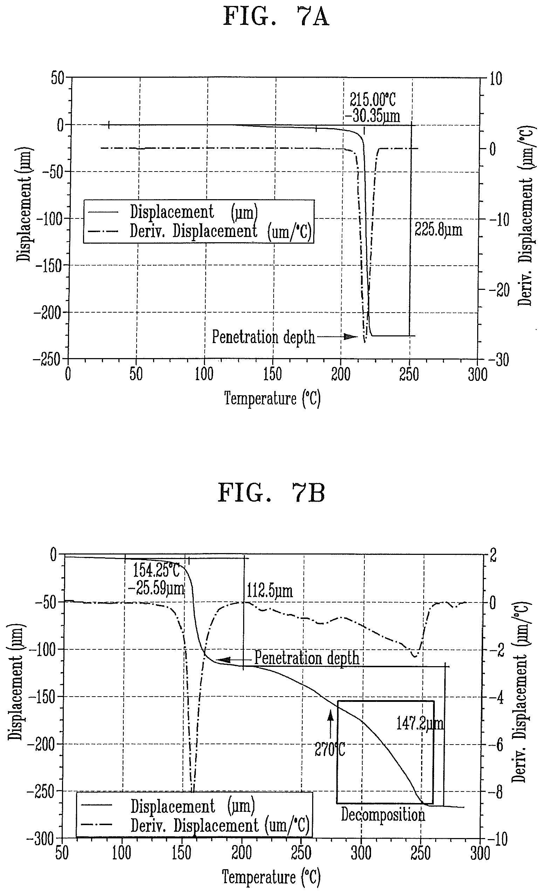

Hereinafter, insulators according to an inventive example and a comparative example will be described with reference to FIGS. 7A to 9B.

First, in the inventive example, an injection-moulded part having an insulator shape was fabricated by injection moulding a PP resin, and then a water crosslinking process was performed on the injection-moulded part by placing the injection-moulded part in water together with a crosslinking agent and boiling the water.

The PP resin and the crosslinking agent were XPM800HM and PZ010 by Mitsubishi.

If the process temperature of the water crosslinking process is lower than about 70°C, crosslinking may occur abnormally, and if the process temperature of the water crosslinking process is higher than about 90°C, the insulator shape may be problematic. Therefore, the process temperature of the water crosslinking process may be adjusted to be within the range of about 80°C ± 10°C. In the inventive example, the process temperature of the water crosslinking process was 80°C±5°C.

If the process time of the water crosslinking process is shorter than about three hours, there may be problems with the heat resistance of the insulator, and if the process time of the water crosslinking process is longer than about four hours, the productivity of the water crosslinking process may be low. Therefore, the process time of the water crosslinking process may be adjusted to be within the range of about three hours to about four hours. In the inventive example, the process time of the water crosslinking process was four hours.

Next, in the comparative example, an injection-moulded part having an insulator shape was fabricated using polybutylene terephthalate (PBT).

Thermo-mechanical analysis (TMA) was performed using a probe on the insulators of the inventive example and the comparative example. FIG. 7A illustrates results of the TMA performed on the insulator of the comparative example, and FIG. 7B illustrates results of the TMA performed on the insulator of the inventive example. In FIGS. 7A and 7B, the left vertical axis refers the displacement (µm) of the probe, the horizontal axis refers to temperature (°C), and the right vertical axis refers to slope (µm/°C).

First, as illustrated in FIG. 7A, in the case of a sample of the insulator fabricated using PBT, the probe completely penetrated the sample at 215°C (100% penetration, refer to a penetration depth indicated by an arrow in FIG. 7A). Here, 215°C was the glass transition temperature (Tg) of PBT measured by differential scanning calorimetry (DSC).

However, as illustrated in FIG. 7B, in the case of the insulator fabricated through an injection moulding process using the PP resin and a water crosslinking process, the probe first penetrated the insulator (50% penetration) at 154°C which was the glass transition temperature (Tg) of the PP resin measured by DSC (refer to a penetration depth indicated by an arrow in FIG. 7B). Thereafter, thermal decomposition proceeded, and the probe completely penetrated the insulator over a temperature range of about 270°C to 360°C (refer to a decomposition region indicated by a square in FIG. 7B).

These results of the TMA show that the insulator of the inventive example is more useful than the insulator of the comparative example as an insulator between the vent plate 132 and the middle plate 134 of the cap assembly 130. The temperature of the secondary battery 100 may be increased generally up to 50°C and even up to 250°C by heat generated during a short circuit test. Thus, after current is interrupted by the operation of the CID of the secondary battery 100 in response to a short circuit, the insulator of the inventive example may stably maintain the current interruption state without being melted.

In addition, a cap assembly including the insulator of the inventive example and a cap assembly including the insulator of the comparative example were fabricated, and an insulation test was performed on the cap assemblies under actual operation conditions of secondary batteries.

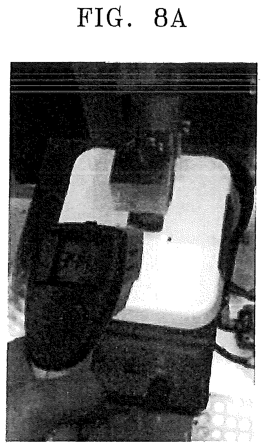

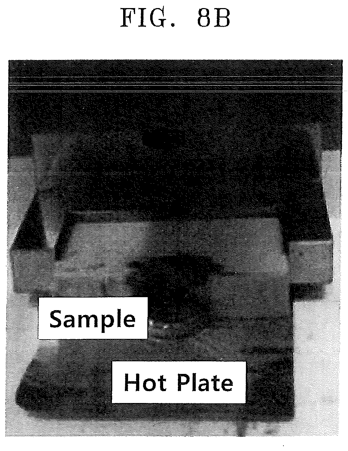

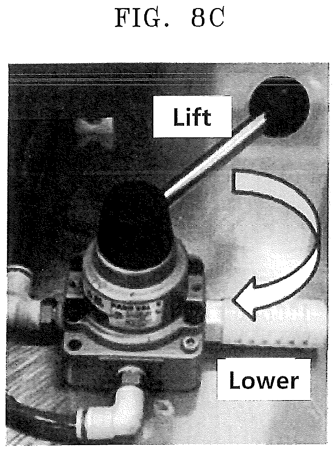

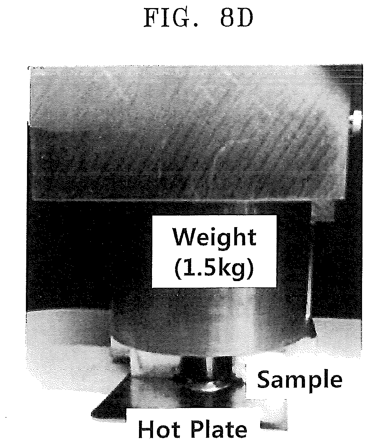

That is, as illustrated in FIGS. 8A to 8D, each of the cap assemblies respectively fabricated using the insulators of the inventive example and the comparative example was placed on a hot plate having a temperature of about 350°C and compressed using a 1.5-kg weight for about 1 minute and 30 seconds, and then the internal resistance (IR) of each of the cap assemblies was measured. The hot plate having a temperature of about 350°C might have provided conditions similar to abnormal heating conditions of a secondary battery, and the compression with the 1.5-kg weight might have provided conditions similar to internal pressure conditions of a secondary battery having gas generated therein.

According to results of the insulation test, the cap assembly including the insulator of the comparative example was short circuited, and the cap assembly including the insulator of the inventive example maintained insulation.

These results of the insulation test showed that when an CID was operated under actual operation conditions of a secondary battery, the cap assembly according to the inventive example could stably maintain an insulation state in which current from an electrode assembly to the cap assembly was interrupted, and the cap assembly according to the comparative example could result in re-flow of current.

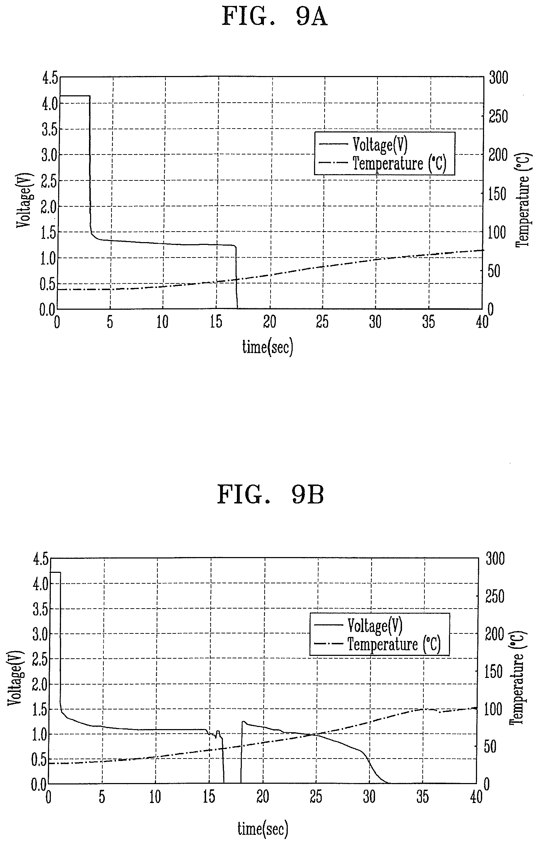

In addition, a cap assembly including the insulator of the inventive example and a cap assembly including the insulator of the comparative example were fabricated, and an external short circuit test was performed on secondary batteries respectively including the cap assemblies. The external short circuit test was performed by forming a short circuit between positive and negative electrode terminals of each of the secondary batteries in the conditions of 25°C and 10 mΩ. FIG. 9A illustrates results of the external short circuit test performed on the secondary battery prepared according to the inventive example, and FIG. 9B illustrates results of the external short circuit test performed on the secondary battery prepared according to the comparative example. In FIGS. 9A and 9B, the left vertical axis refers voltage (V), the horizontal axis refers to time (sec), and the right vertical axis refers to temperature (°C).

Referring to FIG. 9A, the secondary battery including the cap assembly of the inventive example had an output voltage of 0 V at 17 seconds after being externally short circuited under the above-described conditions. That is, a CID of the secondary battery started to operate at 17 seconds after the secondary battery was externally short circuited under the above-described conditions, and thereafter, current interruption by the CID was stably maintained. At that time, the temperature of the secondary battery gradually increased without considerable change by the operation of the CID.

Referring to FIG. 9B, although the secondary battery including the cap assembly of the comparative example had an output voltage of 0 V at 17 seconds after being externally short circuited under the above-described conditions, the output voltage of the secondary battery was restored 1 to 2 seconds thereafter and was maintained at a certain value until 32 seconds. The reason for this was that the insulator of the comparative example was deformed and melted by factors such as heat during the external short circuit situation, and thus current started to flow again after several seconds from the operation of the CID. In addition, due to the re-flow of current, the temperature of the secondary battery was relatively steeply increased to 100°C.

As described above, the secondary battery using the cap assembly including the insulator according to one or more of the embodiments may stably maintain a current interruption state after the CID of the secondary battery is operated in a situation such as an overcharged situation.

In another embodiment, the above-mentioned processes may be used when an insulator including a crosslinked PE resin is fabricated. In this case, the above description may be applied except for the use of a PE resin instead of a PP resin.

As described above, according to the one or more of the above embodiments, even in an abnormal heating situation such as a battery short circuit situation, the insulator of the cap assembly may not melt and the cap assembly may stably maintain the function of the CID for interrupting current from the electrode assembly to the cap assembly.

In addition, according to the one or more of the above embodiments, the insulator of the cap assembly may be formed into a shape suitable for the assembling and functioning of the cap assembly through an injection moulding process for mass production. In addition, the heat resistant characteristics of the insulator may be improved through a single post-process, that is, a water crosslinking process, and thus manufacturing costs may be saved.

In addition, according to the one or more of the above embodiments, when the insulator of the cap assembly is manufactured, the insulator may not be deformed in the water crosslinking process, and thus the fraction defective may be reduced.

As described above, according to the one or more of the above embodiments, the performance of the CID may be stable even in a heating situation such as a battery short circuit situation.

It should be understood that embodiments described herein should be considered in a descriptive sense only and not for purposes of limitation. Descriptions of features or aspects within each embodiment should typically be considered as available for other similar features or aspects in other embodiments.

While one or more embodiments of the invention have been described with reference to the figures, it will be understood by those of ordinary skill in the art that various changes in form and details may be made therein without departing from the scope of the invention as defined by the following claims.

## Claims

1. A cap assembly for a secondary battery, the cap assembly comprising:
a cap plate;
a vent plate provided under the cap plate and comprising a vent portion protruding downward, the vent plate being configured to deform when internal pressure in the secondary battery increases;
a sub-plate provided under the vent plate and connected to the vent portion, the sub-plate and the vent plate together constituting a current interrupt device (CID);
a middle plate provided between the vent plate and the sub-plate and electrically connected to the vent plate via the sub-plate;
an insulator provided between the vent plate and the middle plate, the said insulator having a circular ring shape with a central opening and comprising a crosslinked polymer material; and
an axially projecting anti-deformation rib that is located within an outer circumferential edge region of the circular ring shape of the insulator;
**characterised in that** the anti-deformation rib has a thickness that decreases in the downward axial direction, and an inner side and an outer side, and the outer side of the anti-deformation rib is tapered.

2. A cap assembly according to claim 1, wherein the insulator comprises a crosslinked polypropylene (PP) resin material.

3. A cap assembly according to claim 1, wherein the insulator comprises a crosslinked polyethylene (PE) resin material.

4. A cap assembly according to any preceding claim, wherein a plurality of protrusions protrude from an inner side of the circular ring shape of the insulator toward a centre of the insulator along an inner circumference of the inner side.

5. A cap assembly according to claim 4, wherein the vent plate has an S-shaped bent structure comprising a lower bent portion and an upper bent portion, and the vent plate is interference fitted into the circular ring shape of the insulator,
and wherein, the plurality of protrusions are engaged with an upper portion of the lower bent portion to prevent separation of the vent plate from the insulator.

6. A cap assembly according to any preceding claim, wherein the middle plate and the insulator respectively comprise penetration holes in centre regions thereof, and
the vent portion is directly connected to a centre region of the sub-plate through the penetration hole of the insulator and the penetration hole of the middle plate.

7. A secondary battery comprising a cap assembly according to any preceding claim.

## Patentansprüche

1. Kappenanordnung für eine Sekundärbatterie, bei welcher die Kappenanordnung Folgendes beinhaltet:
eine Kappenplatte;
eine Entlüftungsplatte, welche unterhalb der Kappenplatte bereitgestellt ist und einen nach unten vorstehenden Entlüftungsabschnitt beinhaltet, wobei die Entlüftungsplatte konfiguriert ist, um sich zu verformen, wenn Innendruck in der Sekundärbatterie ansteigt;
eine Unterplatte, die unter der Entlüftungsplatte bereitgestellt und mit dem Entlüftungsabschnitt verbunden ist, wobei die Unterplatte und die Entlüftungsplatte gemeinsam eine Stromunterbrechungsvorrichtung (CID) bilden;
eine Mittelplatte, welche zwischen der Entlüftungsplatte und der Unterplatte bereitgestellt und elektrisch mit der Entlüftungsplatte über die Unterplatte verbunden ist;
einen Isolator, der zwischen der Entlüftungsplatte und der Mittelplatte bereitgestellt ist, wobei der Isolator eine kreisförmige Ringform mit einer mittleren Öffnung besitzt und ein vernetztes Polymermaterial beinhaltet; und
eine axial vorspringende Antideformationsrippe, welche innerhalb eines äußeren Umfangskantenbereichs der kreisförmigen Ringform des Isolators befindlich ist;
**dadurch gekennzeichnet, dass** die Antideformationsrippe eine Dicke besitzt, welche sich in der axialen Abwärtsrichtung verringert, und eine innere Seite und eine äußere Seite, und die äußere Seite der Antideformationsrippe sich verjüngt.

2. Kappenanordnung nach Anspruch 1, bei welcher der Isolator ein vernetztes Polypropylen-Harzmaterial (PP) beinhaltet.

3. Kappenanordnung nach Anspruch 1, bei welcher der Isolator ein vernetztes Polyethylen-Harzmaterial (PE) beinhaltet.

4. Kappenanordnung nach einem der vorhergehenden Ansprüche, bei welcher eine Vielzahl von Vorsprüngen von einer inneren Seite der kreisförmigen Ringform des Isolators in Richtung auf einen Mittelpunkt des Isolators entlang eines Innenumfangs der inneren Seite vorspringt.

5. Kappenanordnung nach Anspruch 4, bei welcher die Entlüftungsplatte eine S-förmig gebogene Struktur besitzt, welche einen unteren gebogenen Abschnitt und einen oberen gebogenen Abschnitt besitzt, und die Entlüftungsplatte reibschlüssig in die kreisförmige Ringform des Isolators eingepasst ist,
und wobei die Vielzahl von Vorsprüngen mit einem oberen Abschnitt des unteren gebogenen Abschnitts in Eingriff steht, um Trennung der Lüftungsplatte vom Isolator zu verhindern.

6. Kappenanordnung nach einem der vorhergehenden Ansprüche, bei welcher die Mittelplatte und der Isolator jeweils Penetrationslöcher in mittleren Bereichen hiervon beinhalten, und
der Entlüftungsabschnitt direkt mit einem mittleren Bereich der Unterplatte durch das Penetrationsloch des Isolators und das Penetrationsloch der Mittelplatte verbunden ist.

7. Sekundärbatterie, welche eine Kappenanordnung nach einem der vorhergehenden Ansprüche beinhaltet.

## Revendications

1. Ensemble formant capuchon pour une batterie secondaire, l'ensemble formant capuchon comprenant :
une plaque de capuchon ;
une plaque d'évent prévue sous la plaque de capuchon et comprenant une partie d'évent bombée vers le bas, la plaque d'évent étant conçue pour se déformer lorsque la pression interne augmente dans la batterie secondaire ;
une sous-plaque prévue sous la plaque d'évent et reliée à la partie d'évent, la sous-plaque et la plaque d'évent constituant ensemble un interrupteur de courant (CID, current interrupt device) ;
une plaque intermédiaire prévue entre la plaque d'évent et la sous-plaque et reliée électriquement à la plaque d'évent par le biais de la sous-plaque ;
un isolant prévu entre la plaque d'évent et la plaque intermédiaire, ledit isolant ayant la forme d'un anneau circulaire doté d'une ouverture centrale et comprenant un matériau polymère réticulé ; et
une nervure anti-déformation en saillie axiale située dans une zone de bord circonférentiel extérieur de la forme d'anneau circulaire de l'isolant ;
**caractérisé en ce que** la nervure anti-déformation a une épaisseur allant en diminuant dans un sens axial dirigé vers le bas, et présente un côté intérieur et un côté extérieur, le côté extérieur de la nervure anti-déformation étant pentu.

2. Ensemble formant capuchon selon la revendication 1, dans lequel l'isolant comprend un matériau de résine de polypropylène (PP) réticulé.

3. Ensemble formant capuchon selon la revendication 1, dans lequel l'isolant comprend un matériau de résine de polyéthylène (PE) réticulé.

4. Ensemble formant capuchon selon l'une quelconque des revendications précédentes, dans lequel une pluralité de saillies dirigées vers le centre de l'isolant, à partir du côté intérieur de la forme d'anneau circulaire de l'isolant, sont réparties le long d'une circonférence intérieure du côté intérieur.

5. Ensemble formant capuchon selon la revendication 4, dans lequel la plaque d'évent présente une structure repliée en S comprenant une partie repliée inférieure et une partie repliée supérieure, et la plaque d'évent est ajustée avec serrage dans la forme d'anneau circulaire de l'isolant,
et dans lequel la pluralité de saillies sont en prise avec une partie supérieure de la partie repliée inférieure afin d'empêcher la séparation de la plaque d'évent et de l'isolant.

6. Ensemble formant capuchon selon l'une quelconque des revendications précédentes, dans lequel la plaque intermédiaire et l'isolant comprennent chacun des trous traversants dans leur zone centrale, et
la partie d'évent est directement reliée à une zone centrale de la sous-plaque par le biais du trou traversant de l'isolant et du trou traversant de la plaque intermédiaire.

7. Batterie secondaire comprenant un ensemble formant capuchon selon l'une quelconque des revendications précédentes.
